# EUROPÄISCHE PATENTANMELDUNG

(11) **EP 1 167 192 A2**
(43) Veröffentlichungstag der Anmeldung: **02.01.2002**
(21) Anmeldenummer: 01810608.8
(22) Anmeldetag: 22.06.2001
(51) Int. Cl.: B65B 9/20

(54) **Vorrichtung für die Kantensiegelung von Standbeuteln in einer Schlauchbeutelmaschine**

(30) Priorität: 30.06.2000 CH 12942000
(71) Anmelder: O-Mega Packaging AG, 6814 Lamone (CH)
(72) Erfinder: Klinkel, Wolfgang, 6900 Massagno (CH)
(74) Vertreter: Gaggini, Carlo, Ing.

(57) **Zusammenfassung**

Die Versiegelung der Kanten geschieht durch Einklemmen der Folie, unter Falzbildung, zwischen den Siegelleisten 9 bis 12 und einem Amboss 13, wobei eine Drucksiegelung erreicht wird. Weiter ist die Vorrichtung dadurch gekennzeichnet, dass sich die Siegelleisten 9 bis 12 in gleicher Höhe der Folienabzugsriemen (4) befinden und gleich lang sind wie die Folienabzugsriemen (4). Die Vorrichtung gestattet, längere, versiegelte Kanten des Beutels herzustellen, ohne die Höhe der Maschine und die Fallhöhe des Produktes unnötig zu vergrössern. Dank der Druckversiegelung - ein Verfahren, welches bisher nicht möglich war - lassen sich weiter auch schwierig zu bearbeitende Folien (wie Laminate mit Metallfolien) tadellos an den Kanten versiegeln.

## Beschreibung

Die vorliegende Erfindung betrifft eine Vorrichtung für die Kantensiegelung von Standbeuteln in Beutelverpackungsmaschinen, wie im Oberbegriff des Anspruchs 1 beschrieben.

Bei Beutelverpackungsmaschinen ist es bekannt, sogenannte Standbeutel zu erzeugen. Ein Verfahren für die Herstellung solcher Standbeutel ist in der Parallelanmeldung des gleichen Anmelders, eingereicht am gleichen Tag der vorliegenden Erfindung, mit dem Titel "Verfahren zur Umlegung und Anheftung der Bodennaht eines Standbeutels in einer Beutelverpackungsmaschine und Vorrichtung zur Durchführung des Verfahrens" beschrieben. Der Inhalt dieser Anmeldung wird als integrierender Bestandteil der vorliegenden Anmeldung erklärt.

Bei solchen Standbeuteln ist es nun bekannt, die vier Kanten zu versiegeln, d.h. thermisch so zu behandeln, dass sie steif werden. Dies hat den Vorteil, dass der Beutel eine viereckige Form annimmt, was, gegenüber der gewöhnlichen, ausgewölbten "Taschenform", einen vorteilhafteren optischen Eindruck hinterlässt und auch weniger Volumen einnimmt.

Die Beutel mit versiegelten Kanten haben sich in der Folge einen bedeutenden Platz auf dem Markt erobert.

Die bekannten Beutelverpackungsmaschinen, und auch die entsprechende Patentlitertur, erzeugen die Kantensiegelung dadurch, dass nach der Folienabzugsvorrichtung, welche in der Regel zwei an gegenüberliegenden Seiten des Formatrohres gegen das Rohr angepresste und angetriebene Folienabzugsriemen enthält, eine aus vier beheizten Siegelleisten gebildete Kantensiegelvorrichtung vorgesehen ist. Die vier Siegelleisten des Standes der Technik arbeiten mit den Kanten des Formatrohres und sind in der Regel als Winkel geformt. Jede Siegelleiste "umarmt" die entsprechende Kantelängs einer bestimmten Strecke in beiden senkrechtstehenden Richtungen und versiegelt somit die Kante "bügeleisenartig" dadurch, dass die Folienkante durch den erwärmten Spalt zwischen der Kante des Formatrohres und die gewinkelte Siegelleiste gezogen wird.

Diese bekannte Art der Kantensiegelung von Standbeuteln hat zwei sehr wichtige Nachteile, nämlich:
a) durch die serielle Anordnung der Siegelleisten nach der Folienabzugsvorrichtung wird, bei gleicher Länge des Formatrohres, eine relativ kurze Strecke der Beutelkante versiegelt. Wenn die ganze Beutelkante in einer einzigen Operation versiegelt werden muss, dann muss entweder die Beutellänge relativ kurz sein (praktisch zirka halb so lang wie die Formatrohrlänge), oder die Formatrohrlänge muss sehr lang gewählt werden, was einer grösseren Fallhöhe für das Produkt entspricht, mit den dadurch verursachten, bekannten Nachteilen.
b) die "bügeleisenartige" Bildung der Siegelnaht, bei welcher die Verpackungsfolie während der Siegeloperation zwischen der Formatrohrkante und der entsprechenden Siegelleiste verschoben wird, gestattet nur eine reduzierte Siegeloperation, da die Siegelung nicht unter Druck (bzw. mit einem sehr mässigen Druck) geschehen kann. Eine solche Art von Siegelung ist z.B. ungenügend bei der Verwendung von sogenannten Laminaten als Verpackungsfolie, d.h. Folien aus verschiedenen Plastik- und/oder Metallfolien. Bei solchen Materialien ist nur eine Siegelung der Kante unter Druck (d.h. unter Wärme-und Druckeinwirkung) vielversprechend.

Die vorliegende Erfindung bezweckt, die genannten Nachteile der oben beschriebenen Kantensiegelungstechnologie zu überwinden und insbesondere eine Vorrichtung vorzuschlagen, welche folgende Ziele zu erreichen vermag:
a) Herstellung von Standbeuteln mit langen, versiegelten Kanten, trotz relativ kurzer Länge des Formatrohres und in einer einzigen Versiegelungsoperation, womit eine höhere Ausbringung der Maschine, gegenüber der Lösung des Standes der Technik, gewährleistet wird;
b) die Möglichkeit, Siegelkanten unter Druck, d.h. im Stillstand der Folie, durch Klemmung der Folie zwischen eine beheizte Siegelleiste und eine freie Gegenleiste (eine Art Amboss), zu erzeugen.

Diese Ziele werden, mit einer Vorrichtung für die Kantensiegelung entsprechend dem Oberbegriff des Anspruchs 1, durch die Merkmale des kennzeichnenden Teils des Anspruchs 1 erreicht.

Dadurch, dass sich die Siegelleisten in gleicher Höhe der Folienabzugsriemen befinden, und nicht mehr in serieller Anordnung wie nach dem Stand der Technik, lässt sich praktisch die ganze Länge der Riemen auch für die Siegeloperation verwenden, womit die Dimensionen der Maschine kleiner gehalten werden können. Dank der Anwendung eines Ambosses als Gegenpartie zu jeder Siegelleiste wird es möglich, wie anhand der folgenden Beschreibung der Ausführungsbeispiele näher erklärt werden soll, die Versiegelung unter Druck zu realisieren und auch die Versiegelung unter Bildungs eines Längsfalzes der Folie, d.h. einer robusten Kante des Beutels, zu erreichen.

Weitere Vorteile der Erfindung werden nun anhand der Beschreibung einiger Durchführungsbeispiele näher geschildert. Die Figuren, welche die genannten Beispiele illustrieren, zeigen:
- Fig. 1: eine Ansicht von vorne der Vorrichtung für die Kantensiegelung von Standbeuteln in einer Beutelverpackungsmaschine, wobei von der Maschine nur die Elemente in schematischer Darstellung gezeigt werden, welche für das Verständnis der Erfindung nötig sind;
- Fig. 2: die Vorrichtung der Fig. 1 von der Seite gesehen;
- Fig. 3: ein Grundriss, in etwas vergrösserter Darstellung, der Vorrichtung der Figuren 1 und 2, geschnitten nach der Linie A - A der Fig. 2;
- Fig. 4: der Schnitt der Vorrichtung durch die Linie B - B der Fig. 2;
- Fig. 5 und 6: zwei Varianten eines Standbeutels, geschnitten längs einer horizontalen Ebene und in rein schematischer Darstellung;
- Fig. 7: die Vorrichtung in einer Darstellung entsprechend Fig. 3 in der offenen Betriebsposition;
- Fig. 8: die Vorrichtung der Fig. 7 in der geschlossenen Betriebsposition;
- Fig. 9: die Vorrichtung der Fig. 7 in der Serviceposition.

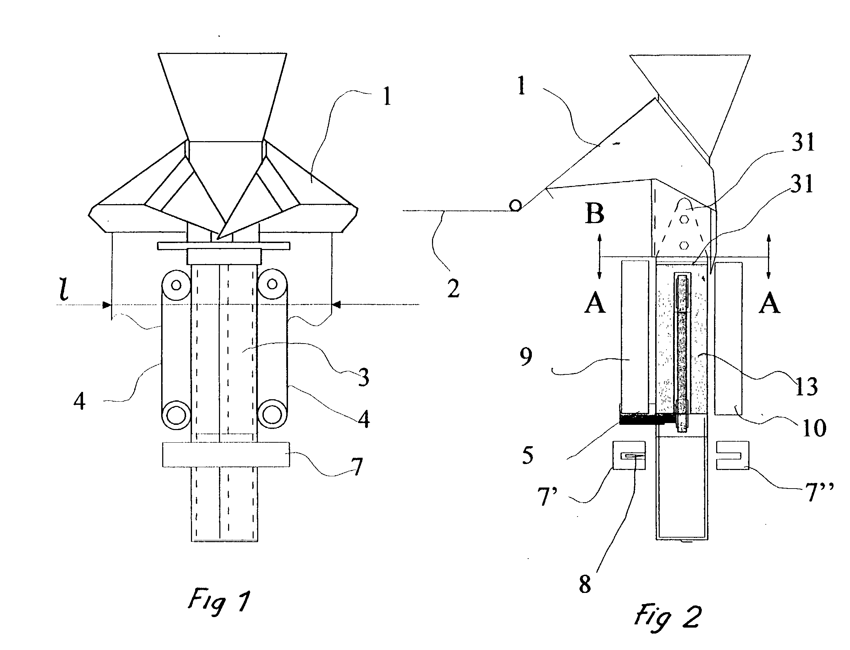

Die Figuren 1, 2 und 3 zeigen die Antriebselemente der Beutelverpackungsmaschine in den drei klassischen Ansichten (von vorne, von der Seite und von oben), wobei absichtlich nur die Elemente der Beutelverpackungsmaschine gezeigt werden, welche zur Erklärung der erfinderischen Vorrichtung - Bauweise und Funktion - nötig sind. Diese Vereinfachung der Darstellung ist gewählt worden, um die Darstellung nicht unnötig zu belasten und weil man annehmen darf, dass die grundsätzliche Bauweise einer Beutelverpackungsmaschine jedem Fachmann bekannt ist. Eine reiche Patentliteratur (nur um ein Dokument zu nennen, siehe z.B. die Fig. 1 der DE 3031 399 A1) existiert und kann ebenfalls herangezogen werden. Die vorliegende Erfindung geht aus der Praxis der Beutelverpackungsmaschinen mit Kantensiegelung hervor, welche ebenfalls jedem Fachmann bestens bekannt ist.

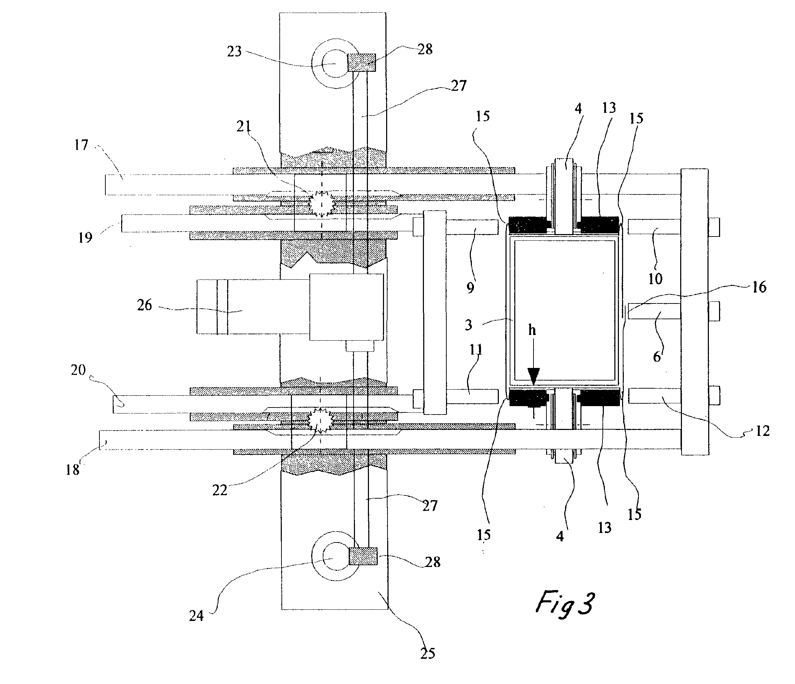

In den Figuren 1 und 2 wird mit 1 eine Formatschulter bezeichnet, auf welche eine von einer nicht gezeigten Folienfördervorrichtung geförderte Folie 2 gezogen wird. Die Schulter hat die Aufgabe, die flache Folie 1 in ein Rohr umzuformen, welches das Formatrohr 3 umwickelt. Das Formatrohr 3 hat, bei Beutelverpackungsmaschinen für Standbeutel, einen rechteckigen Querschnitt, wie man in Fig. 3 sehen kann, womit die, das Formatrohr 3 umwickelnde Verpackungsfolie (nicht gezeigt in den Figuren 1 und 2), längs dem Formatrohr 3 vier Kanten bildet, welche es, nach der Aufgabe dieser Vorrichtung, thermisch zu versiegeln gilt.

Mit 4 sind die Folienabzugsriemen bezeichnet, welche Teil einer Folienabzugsvorrichtung sind und an zwei gegenüberliegenden Seiten des Formatrohres 3 gegen das Rohr angepresst und - z.B. mittels eines Motors 5 - angetrieben werden. Die Aufgabe der Folienabzugsriemen 4 ist es, die Folie schrittweise oder - nach einer konstruktiven Variante der Beutelverpackungsmaschine - kontinuierlich längs dem Formatrohr 3 zu transportieren. Die Reibung zwischen den Riemen 4 und dem Rohr 3 muss natürlich grösser sein als die Reibung zwischen der Folie und dem Rohr selber. Alles dies ist selbstverständlich bekannt und wird laufend praktiziert.

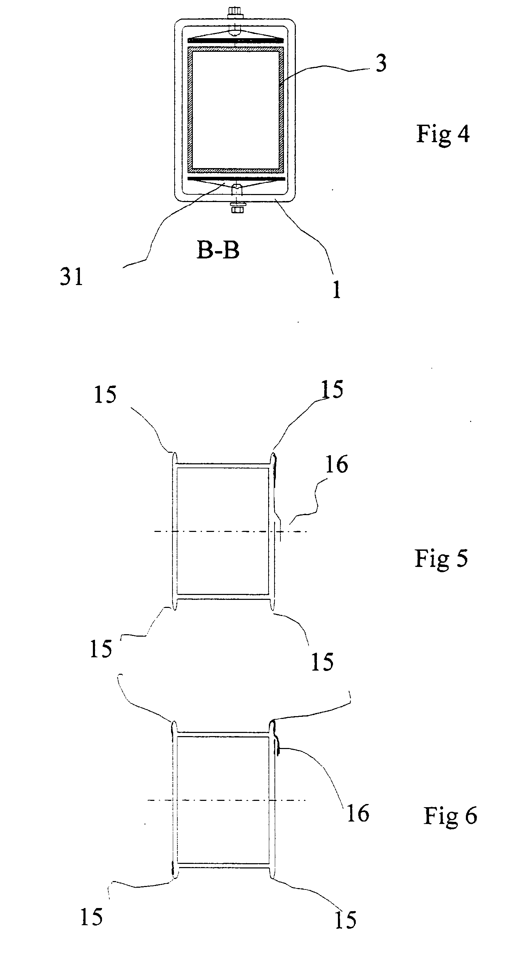

Weiter weist die erfinderische Vorrichtung ein beheiztes Verschliesswerkzeug 6 auf (siehe Fig. 3), welches sich in vertikaler Stellung befindet und zum Formatrohr 3 hin und von ihm weg bewegt wird. Es sei hier bereits bemerkt, dass die Lage des Verschliesswerkzeuges 6 für die Längsnaht nicht unbedingt in der Mitte einer Seite (meist die breitere Seite) des Formatrohrs 3, wie in Fig. 3 gezeigt, liegen muss. In einer Variante der Durchführung der Erfindung, schematisch gezeigt in der Fig. 6, fällt die Längsnaht des Beutels z.B. mit einer Kante des Beutels zusammen, womit bestimmte Vorteile erreicht werden können. Die in Fig. 3 gezeigte Lage des Verschliesswerkzeuges 6 ist allerdings die üblichste.

Unter dem Formatrohr 3 ist ein beheiztes Verschliesswerkzeug 7 für die Bildung der Quernaht des Beutels angebracht. Auch dieses Werkzeug 7 ist von üblicher, bekannter Art und wird aus zwei Teilen 7' und 7" (siehe Fig. 2) gebildet. Der Teil 7' enthält ein Messer 8. Die beiden Teile 7' und 7" werden durch geeignete Parallelführungen (nicht gezeigt) getragen und geführt und können, in der - nicht gezeigten - Schliessposition, den Beutel verschliessen und abtrennen. Ausserdem ist die Verschliessvorrichtung 7 mit nicht gezeigten, aber an sich bekannten Faltorganen für die Bildung des flachen Bodens des Beutels ausgerüstet. Schliesslich sind vier beheizte Siegelleisten 9, 10, 11 und 12 vorhanden, welche sich an den Kanten des sich formenden Beutels befinden und eine Siegelung unter Erwärmung der Kanten bewirken. Alles bis hier beschriebene ist Stand der Technik und wird in der Praxis verwendet, wobei sich die Folienabzugsriemen 4 und die Siegelleisten 9 bis 12 in Transportrichtung der Folie folgen und somit eine relativ grosse Länge des Formatrohres 3, mit dem bekannten Nachteil, bewirken.

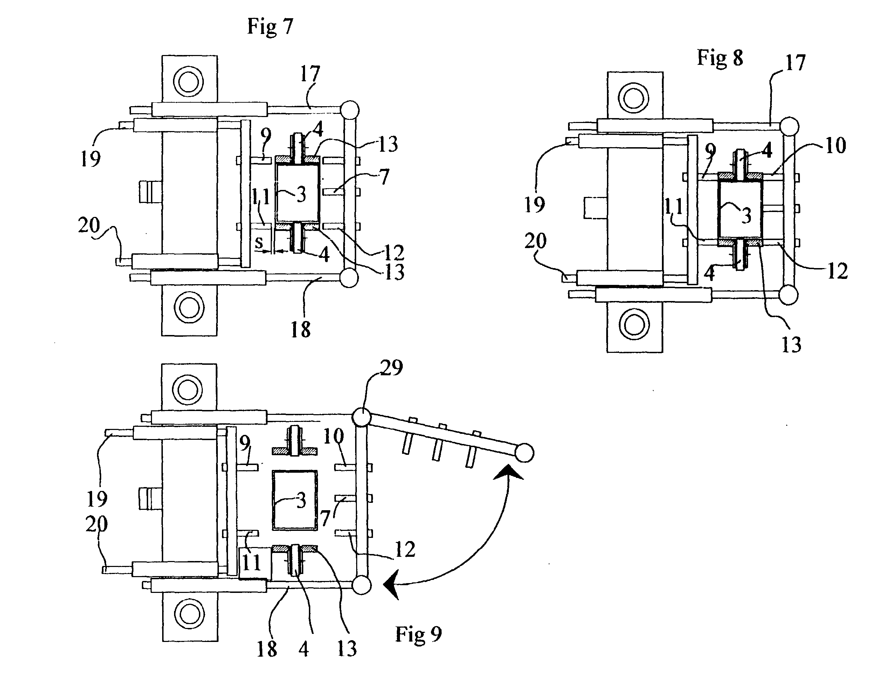

Die vorliegende Erfindung unterscheidet sich nun vom Stand der Technik gerade dadurch, dass sich die Siegelleisten 9 bis 12 in gleicher Höhe mit den Folienabzugsriemen 4 befinden und dass sie im wesentlichen gleich lang sind. Weiter sind an den mit den Folienabzugsriemen 4 zusammenarbeitenden, gegenüberliegenden Seiten des Formatrohres 3 zwei U-förmige Ambosse 13 vorhanden, welche von oben auf jeden der Folienabzugsriemen 4 aufgeschoben werden. Zwischen jedem Amboss 13 und der entsprechenden Fläche des Formatrohrs 3 ist ein geringer Abstand vorhanden, wobei h, nach einer bevorzugten Variante der Erfindung, kleiner als 0,5 mm sein soll. Die Ambosse 13 haben nun die entscheidende Funktion, im Rahmen der Erfindung, die Verpackungsfolie in den Spalt zwischen Amboss 13 und die gegenüberliegende Fläche des Formatrohrs 3 zu führen und zur Bildung einer Siegelfalz an jeder Beutelkante zu zwingen. Zur Bildung der Siegelfalz - wie sie in den Figuren 5 und 6 sichtbar wird - genügt es vorzusehen, dass der Umfang des Formatrohres 3 kleiner als die Abwicklung der Verpackungsfolie - unter Berücksichtigung der Ueberlappung der Siegelnaht - ist, d.h. die Folienbreite I (siehe Fig. 1) muss grösser sein als der Umfang des Formatrohres 3 plus die Ueberlappung für die Längsnaht. Wenn dies der Fall ist, muss der Beutel in den Kanten Falten bilden, wie es von dieser Erfindung verlangt wird. Es handelt sich um eine reine Dimensionierungsfrage der Folie, welche von jedem Fachmann ohnebesondere Kenntnis gelöst werden kann. Später werden wir jedoch eine bevorzugte Möglichkeit erläutern, wie die kontinuierliche Bildung solcher Falze begünstigt werden kann. Es sei allerdings unterstrichen, dass die Bildung der Kantenfalze prinzipiell nur eine Frage der Dimensionierung ist. In Fig. 3 ist die bereits als Beutel geformte Folie 14 abgebildet, wobei mit 15 die Kantenfalze und mit 16 die Längsnaht bezeichnet werden. In Fig. 3 ist auch klar sichtbar, wie die Siegelleisten 9 bis 12 auf parallele, horizontale Führungen 17 bis 19 geführt werden. Jedes Führungspaar 17,19 bzw. 18,20, wird mittels eines Zahnrades 21 bzw. 22 - nach einer Lösung welche Gegenstand einer parallelen Patentanmeldung des gleichen Anmelders mit dem Titel "Schliessvorrichtung für die Verschliesswerkzeuge einer Beutelverpackungsmaschine" ist - hin und her zwischen einer offenen Betriebslage, bei welcher zwischen den Siegelleisten 10 bis 12 und den entsprechenden Ambossflächen ein offener Spalt frei bleibt, welcher auch in Fig. 7 dargestellt ist, und einer geschlossenen Betriebslage, bei welcher die Siegelleisten 9 bis 12 gegen die entsprechenden Flächen der Ambosse 13 drücken, was in Fig. 8 dargestellt ist. In dieser geschlossenen Betriebslage findet die Siegelung der gefalteten Kanten nach der Erfindung statt, womit eine sehr robuste Kante gebildet wird. Weiter gestattet die Bildung einer Kante unter Falzbildung, wie gezeigt, die Verwendung von Materialien für die Beutel, welche sich ohne Falzbildung nicht versiegeln lassen, wie z.B. Laminate. Dies eröffnet neue Möglichkeiten für die Herstellung von Standbeuteln mit versiegelten Kanten.

Nach einer ersten bevorzugten Ausführungsvariante der Erfindung ist der Amboss 13 jeder Seite des Formatrohres 3 eine Einheit mit dem entsprechenden Folienabzugsriemen 4. Dies wird z.B. dadurch erreicht, dass der Amboss 13 direkt, durch Aufschieben auf das Folienabzugsriemenaggregat, mit diesem gekuppelt ist. Weiter ist dann vorgesehen, dass die Einheit Amboss-Folienabzugsriemen an einem fixen Punkt des Maschinengestells (nicht gezeigt) fixiert ist. Dank dieser Lösung erreicht man den Vorteil (besonders in den Figuren 7 bis 9 dargestellt), dass jeder Folienabzugsriemen 4 und der entsprechende Amboss 13 immer gemeinsam verschoben werden können und somit auch immer richtig zueinander und zum Formatrohr 3 positionierbar sind. Dies erleichtert sehr stark die Einstellarbeit der Kantensiegelvorrichtung.

Nach einer weiteren bevorzugten Ausführungsform der Erfindung ist dann vorgesehen, dass der Amboss 13 jeder Seite des Formatrohres 3 eine Einheit mit den entsprechenden Folienabzugsriemen 4, mit den Siegelleisten 9, 11 bzw. 10,12 und mit dem Verschliesswerkzeug 6 für die Längsnaht bildet und dass die zwei Einheiten längs vertikaler Führungen 23 und 24 der Maschine zu einer gemeinsamen, motorisch angetriebenen Auf- und Abbewegung geführt werden. In Fig. 3 ist sichtbar, wie ein Träger 25 die Führungen 17 bis 20 trägt, welcher Träger somit die Folienabzugsriemen 4 mit den Ambossen 13, als auch die Siegelleisten 9 bis 12 und das Verschliesswerkzeug 6 für die Längsnaht trägt. Alle diese Organe können somit als Einheit durch den Motor 26 und mittels der Achse 27 und der zwei Ritzel 28 auf und ab verschoben werden. Dies gestattet eine ganz neue Art von Versiegelung der Kanten eines Standbeutels, bei welcher die Arbeitsorgane in offener Betriebsstellung nach oben verschoben, in der höchsten Position geschlossen werden und in geschlossener Betriebslage, während welcher die Versiegelung der Kanten und die Verschliessung der Längsnaht stattfinden, nach unten bewegt werden. Die Folienabzugsriemen 4 können ihrerseits immer mit der Beutelfolie in Kontakt bleiben falls sie, wie mit einer parallelen Anmeldung des gleichen Anmelders vorgeschlagen, von einem momentengeregelten Motor angetrieben werden. Diese Siegeltechnik gestattet es, die Ausbringung der Maschine zu steigern.

Nach einer weiteren bevorzugten Ausführungsform der Erfindung ist es vorgesehen, dass die Siegelleisten 9 bis 12 paarweise in parallelen Führungen 18, 21 bzw. 19, 20 geführt werden und von einer offenen Betriebsstellung, wie in Fig. 7 dargestellt, in welcher sie einen fixen Spalt s (Fig. 7) zwischen sich und der entsprechenden Fläche des Ambosses 13 lassen, und einer geschlossenen Betriebsstellung, wie in Fig. 8 dargestellt, in welcher sie gegen das Formatrohr 3 gepresst werden und somit die Beutelfolie in geklemmtem Zustand siegeln - sodass die Kantensiegelung unter Druck ausgeführt wird - auf- und zubewegt werden. In geschlossener Betriebsstellung der Siegelleisten 9 bis 12 stehen die Folienabzugsriemen 4 natürlich still gegenüber den Siegelleisten 9 bis 12. Der Vorteil der Siegelung der Kanten des Beutels unter Druck ist bereits oben erwähnt worden und braucht hier nicht wiederholt zu werden.

Eine weitere bevorzugte Variante der Erfindung, welche vor allem bediengstechnische Vorteile bietet, wie leichte und rasche Einstellbarkeit und Anpassung an neue Dimensionen des Formatrohres 3, ist in Fig. 9 gezeigt. Nach dieser Variante sind die zwei Folienabzugsriemen 4 mit den zwei Ambossen 13, das Längsnahtverschliesswerkzeug 6 und die paarweise angeordneten Siegelleisten 9 bis 12 , ausgehend von der in Fig. 7 gezeigten offenen Betriebsposition, in einer in Fig. 9 dargestellten Serviceposition bewegbar. In der Serviceposition sind diese Elemente weit weg vom Formatrohr 3, womit der leichte Zugang zum Formatrohr 3 gestattet wird. Die an der Vorderseite der Maschine gelegenen Siege- und Verschliesswerkzeuge sind weiter gemeinsam um eine vertikale Achse 29 klappbar angeordnet. Dank dieser Lösung kann man sehr bequem das Formatrohr 3 austauschen oder andere Einstelloperationen an ihm durchführen.

Nebenbei sei auch bemerkt, dass die gezeigte Art der Führung der Arbeitsorgane der Maschine die sehr leichte Anpassung der Lage der Folienabzugsriemen 4 und der Siegelleisten 9 bis 12, sowie des Längsnahtverschliesswerkzeuges 6 an die Dimensionen des Formatrohres 3 gestattet. Dies ist von grosser praktischer Bedeutung, da die Dimensionen des Formatrohres 3 (Umfang und Länge) entscheidend für das Format der herzustellenden Beutel sind und relativ oft, im praktischen Betrieb der Maschine, den Marktbedürfnissen angepasst werden müssen.

Nach einer weiteren bevorzugten Ausführungsvariante der Erfindung, in den Figuren 2 und 4 dargestellt, ist vorgesehen, dass zur Erleichterung der Bildung der Kantenfalze 15 (siehe Fig. 3), zwischen der Formatschulter 1 und der oberen Kante 30 jedes Ambosses 13 ein im wesentlichen dreieckförmiges Leitblech 31 vorhanden ist, welches die Beutelfolie 2 zur Bildung von zwei Falzen 15 zwingt, wobei jeder Falz 15, wie in Fig. 3 gezeigt, zwischen den Amboss 13 und den entsprechenden Siegelleisten 9 bis 12 zu liegen kommt und so eine doppelbahnige Siegelkante bildet.

Der Vorteil des Leitbleches 31 liegt auf der Hand. Auch ohne Leitblech 31 bilden sich - wenn die Bedingungen dazu erfüllt sind: siehe oben - die Falze 15, aber die Leitbleche 31 helfen zu erreichen, dass die Falze 15 genauer längs den vier Kanten verteilt werden, womit schönere und regelmässigere versiegelte Kanten hergestellt werden.

Schliesslich ist es nach einer weiteren, in den Figuren 5 und 6 dargestellten Variante, möglich, eine Kantensiegelleiste auch mit der Längsnahtsiegelleiste zu kombinieren, womit der Vorteil erreicht wird, dass nur vier statt fünf Siegel- oder Verschliesswerkzeuge benötigt werden. In Fig. 5 ist ein Beutel gezeigt, welcher mittels vier an den Kanten plazierten Siegelleisten und eines in der Mitte einer Längsseite des Beutels plazierten Längsnahtverschliesswerkzeuges hergestellt wurde. Eine solche Vorrichtung ist abgebildet in sämtlichen beschriebenen Beispielen der Figuren 3, 7, 8 und 9, wo mit 7 das separate Längsnahtverschliesserkzeug dargestellt wird. In Fig. 6 ist dagegen gezeigt, dass die Längsnaht 16 mit einer versiegelten Kante 15 zusammenfällt. Eine solche kombinierte Verschliess- und Siegelnaht kann in erfinderischer Weise durch ein einziges Siegel- und Verschliesswerkzeug hergestellt werden, welches bevorzugt etwas breiter als ein Siegelwerkzeug für die einfache Siegelung einer Kante sein sollte. Der Vorteil dieser Lösung ist vor allem wirtschaftlicher Natur, wobei auch gewisse ästhetische Aspekte nicht zu unterschätzen sind.

Der Antrieb der Arbeitselemente der erfinderischen Vorrichtung kann in verschiedener Art und Weise erfolgen, z.B. mittels Einzelmotor, pneumatisch, hydraulisch oder rein mechanisch durch Kurvenscheiben usw., und dies, ohne aus dem Schutzumfang der Erfindung herauszutreten.

### Figurenbeschreibung

- 1: Formatschulter
- 2: Folie
- 3: Formatrohr
- 4: Folienabzugsriemen
- 5: Motor
- 6: Verschliesswerkzeug für die Längsnaht
- 7: Verschliesswerkzeug für die Quernaht
- 8: Messer
- 9: Siegelleiste
- 10: Siegelleiste
- 11: Siegelleiste
- 12: Siegelleiste
- 13: Amboss
- 14: Folie
- 15: Kantenfalz
- 16: Längsnaht
- 17: Führung
- 18: Führung
- 19: Führung
- 20: Führung
- 21: Zahnrad
- 22: Zahnrad
- 23: vertikale Führung
- 24: vertikale Führung
- 25: Träger
- 26: Motor
- 27: Achse
- 28: Ritzel
- 29: Achse
- 30: obere Kante des Ambosses
- 31: Leitblech

## Patentansprüche

1. Vorrichtung für die Kantensiegelung von Standbeuteln in Beutelverpackungsmaschinen, mit einem Formteil, welcher eine Formatschulter (1) und ein rechteckiges Formatrohr (3) enthält, mit einer Folienabzugsvorrichtung, welche zwei an gegenüberliegenden Seiten des Formatrohres (3) angepresste und angetriebene Folienabzugsriemen (4) enthält, mit einem beheizten Verschliesswerkzeug (6) für die Bildung der Längsnaht des Beutels, welches sich in vertikaler Stellung befindet und zum Formatrohr (3) hin und von ihm weg bewegt wird, mit einem unten am Formatrohr (3) gelegenen, beheizten Verschliesswerkzeug (7) für die Bildung der Quernaht des Beutels und welches mit Faltorganen für die Bildung des flachen Bodens des Beutels zusammenarbeitet und mit vier beheizten Siegelleisten (9, 10, 11, 12), welche an den Kanten des sich um das Formatrohr (3) formenden Beutels befinden und eine Siegelung der Kanten unter Erwärmung bewirken,
**dadurch gekennzeichnet, dass**
die Siegelleisten (9, 10, 11, 12) sich in gleicher Höhe der Folienabzugsriemen (4) befinden und im wesentlichen gleich lang sind wie die Folienabzugsriemen (4) und dass an den, mit den Folienabzugsriemen zusammenarbeitenden, dem Formatrohr (3) gegenüberliegenden Seiten, zwei U-förmige Ambosse (13) vorhanden sind, welche von oben auf jeden Folienabzugsriemen (4) aufgeschoben werden und, mit einem geringen Abstand (h) vom Formatrohr (3), die Folie zwischen sich und das Formatrohr (3) führen und zur Bildung einer Kantenfalz (15) bei jeder Beutelkante zwingt, wobei die Siegelleisten (9, 10, 11, 12) auf parallele Führungen (17, 18, 19, 29) geführt werden und von einer offenen Betriebslage in eine geschlossene Betriebslage, wo sie am Anschlag gegen den Amboss (13) kommen, bewegt werden können.

2. Vorrichtung für die Kantensiegelung nach Anspruch 1,
**dadurch gekennzeichnet, dass**
der Amboss (13) jeder Seite des Formatrohres (3) eine Einheit mit dem entsprechenden Folienabzugsriemen (4) bildet und dass die Einheit an einem fixen Punkt des Maschinengestells befestigt ist.

3. Vorrichtung für die Kantensiegelung nach Anspruch 1,
**dadurch gekennzeichnet, dass**
der Amboss (13) jeder der zwei Seiten des Formtrohres (3) eine Einheit mit dem entsprechenden Folienabzugsriemen (4), mit den Siegelleisten (9, 11 bzw. 10, 12) und mit dem Verschliesswerkzeug (6) für die Längsnaht bildet und dass die zwei Einheiten längs vertikalen Führungen (23, 24) der Maschine zu einer gemeinsamen motorisch angetriebenen Auf- und Abbewegung geführt werden.

4. Vorrichtung für die Kantensiegelung nach Anspruch 1,
**dadurch gekennzeichnet, dass**
die Siegelleisten (9, 10, 11, 12) paarweise in parallelen Führungen (17, 18 bzw. 19, 20) geführt werden und von einer offenen Betriebsstellung, von welcher sie einen freien Spalt zwischen sich und der entsprechenden Fläche des Ambosses (13) lassen, und einer geschlossenen Betriebsstellung, in welcher sie gegen das Formatrohr (3) gepresst werden und somit die Beutelfolie in geklemmtem Zustand siegeln, sodass die Kantensiegelung unter Druck realisiert wird, auf und zu bewegt werden, wobei in geschlossener Betriebsstellung der Siegelleisten (9, 10, 11, 12) die Folienabzugsriemen (4) gegenüber den Siegelleisten (9, 10, 11, 12) stillstehen.

5. Vorrichtung für die Kantensiegellung nach Anspruch 4,
**dadurch gekennzeichnet, dass**
die zwei Folienabzugsriemen (4) mit den zwei Ambossen (13), das Längsnahtverschliesswerkzeug (6) und die paarweise angeordneten Siegelleisten (9, 10, 11, 12), ausgehend von der offenen Betriebsposition, in einer Serviceposition bewegbar sind, in welcher sie weit weg vom Formatrohr (3) plaziert werden und das bequeme Auswechseln des Formatrohres (3) gestatten, wobei die an der Vorderseite der Maschine gelegenen Siegel- und Verschliesswerkzeuge (9, 10, 11, 12, 6) gemeinsam um eine vertikale Achse (29) klappbar angeordnet sind.

6. Vorrichtung für die Kantensiegelung nach Anspruch 1,
**dadurch gekennzeichnet, dass**
der geringe Abstand (a) zwischen dem Formatrohr (3) und der ihm gegenüberliegenden Fläche des Ambosses (13) weniger als 0,5 mm beträgt.

7. Vorrichtung für die Kantensiegelung nach Anspruch 1,
**dadurch gekennzeichnet dass**,
zwischen der Formatschulter (1) und der oberen Kante (30) jedes Ambosses (13) ein im wesentlichen dreieckförmiges Leitblech (31) vorhanden ist, welches die Beutelfolie (2) zur Bildung von zwei Falzen (15) zwingt, wobei jeder Falz (15) zwischen dem Amboss (13) und der Fläche der entsprechenden Siegelleiste (9, 10, 11, 12) zu liegen kommt und so eine doppelbahnige Siegelkante bildet.

8. Vorrichtung für die Kantensiegelung nach Anspruch 1,
**dadurch gekennzeichnet, dass**
die eine der Siegelkanten (9, 10, 11, 12) zugleich die Funktion des Längsverschliesswerkzeuges wahrnimmt.
